# EUROPÄISCHE PATENTANMELDUNG

(11) **EP 1 462 392 A2**
(43) Veröffentlichungstag der Anmeldung: **29.09.2004**
(21) Anmeldenummer: 04007172.2
(22) Anmeldetag: 25.03.2004
(51) Int. Cl.: B65G 1/04

(54) **Antriebseinrichtung für eine Lagervorrichtung**

(30) Priorität: 25.03.2003 DE 20304872 U
(71) Anmelder: Megamat GmbH Büro- und Lagertechnik, 86476 Neuburg/Kammel (DE)
(72) Erfinder: Die Erfindernennung liegt noch nicht vor
(74) Vertreter: Fiener, Josef

(57) **Zusammenfassung**

Für eine vereinfachte Bauweise mit hoher Positioniergenauigkeit und Wartungszeitraum einer Antriebseinrichtung für eine Lagervorrichtung (1) in Form eines mechanischen Schrankes mit einer Vielzahl von Lagergutträgern (3), die von der Antriebseinrichtung mit einer höhenbeweglichen Plattform (4) selektiv zu einer Ein-/Auslageröffnung (5) bewegbar sind, wird vorgeschlagen, dass die Plattform (4) an wenigstens zwei geschlossenen Seilsträngen bestehend aus Tragseil (10) und Gegenzugseil (11) befestigt ist, die jeweils von einer gemeinsamen Seiltrommel (8) abwickelbar sind.

## Beschreibung

Die Erfindung betrifft eine Antriebseinrichtung für eine Lagervorrichtung in Form eines mechanischen Schrankes mit einer Vielzahl von Lagergutträgern, die von der Antriebseinrichtung mit einer höhenbeweglichen Plattform selektiv zu einer Ein/Auslageröffnung bewegbar sind.

Eine derartige Antriebseinrichtung ist aus der US-A-5,810,540 bekannt. Hierbei ist ein mechanischer Schrank beschrieben, bei dem eine Vielzahl von kassettenartigen Lagergutträgern in zwei seitlichen Regalrahmen ein- bzw. ausschiebbar ist. Zwischen diesen beiden rechten bzw. linken Stapelsäulen ist eine Zubringer-Plattform in Höhenrichtung verfahrbar, so das einzelne Lagergutträger aus dem Regalrahmen entnommen werden können und zur Auslagerung einer Öffnung zugeführt werden können. Bei dem genannten Stand der Technik ist die Antriebsvorrichtung an der höhenverfahrbaren Plattform jedoch relativ bauaufwendig, insbesondere da mehrfache Umlenkungen des Antriebsseiles erforderlich sind. Hierdurch wird der Antrieb bei der Höhenpositionierung der Plattform relativ ungenau. Zudem leidet aufgrund der vielfachen Umlenkung des Seiles dessen Lebens- bzw. Wartungsdauer.

Demzufolge liegt der Erfindung die Aufgabe zugrunde, eine Antriebseinrichtung für Lagervorrichtungen zu schaffen, mit der bei einfacher Bauweise eine hohe Positioniergenauigkeit und Wartungszeitraum erreicht wird.

Diese Aufgabe wird gelöst durch eine Antriebseinrichtung gemäß den Merkmalen des Anspruches 1.

Durch die Befestigung der Plattform zwischen einem Tragseil und einem Gegenzugseil wird auch bei abrupten Brems- oder Beschleunigungsvorgängen ein Nachschwingen der Plattform vermieden. Daher kann selbst bei hohen Positioniergeschwindigkeiten, wie dies zur schnellen Ein-/Auslagerung angestrebt wird, eine hohe Positioniergenauigkeit der Plattform erreicht werden. Da zudem die Seilstränge eine einfache Bauweise bei geringen Umlenkungen über nur jeweils ein Umlenkrad aufweisen, wird deren Lebensdauer und Wartungsabstand, auch gegenüber Kettenantrieben wesentlich erhöht. Von besonderem Vorteil ist die Anwendung dieser Antriebseinrichtung in Lagervorrichtungen mit einer vertikal beweglichen Zubringer-Plattform, die zwischen zwei gegenüberliegenden Regalrahmen höhenverfahrbar ist, wobei die Seiltrommeln im unteren Bereich an einer Quertraverse abgestützt sind. Hierdurch ergibt sich eine optimale Krafteinleitung in den Regalrahmen der Lagervorrichtung, so dass Seillängenänderungen kaum auftreten bzw. mit einer einfachen Spannvorrichtung ausgeglichen werden können.

Weitere vorteilhafte Ausgestaltungen sind Gegenstand der Unteransprüche. Nachfolgend wird ein Ausführungsbeispiel der Antriebseinrichtung anhand der Zeichnung näher erläutert und beschrieben. Hierbei zeigen:
Fig. 1 eine Perspektivdarstellung einer Lagervorrichtung;
Fig. 2 eine Schnittdarstellung der Lagervorrichtung gemäß Fig. 1;
Fig. 3 eine Darstellung der Lagervorrichtung in Perspektivansicht; und
Fig. 4 eine Darstellung einer abgewandelten Ausführung.

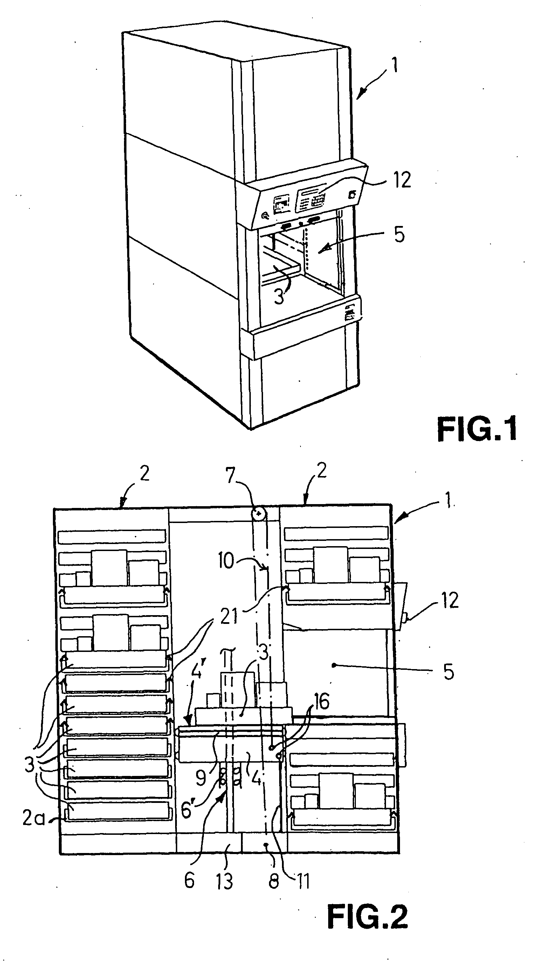

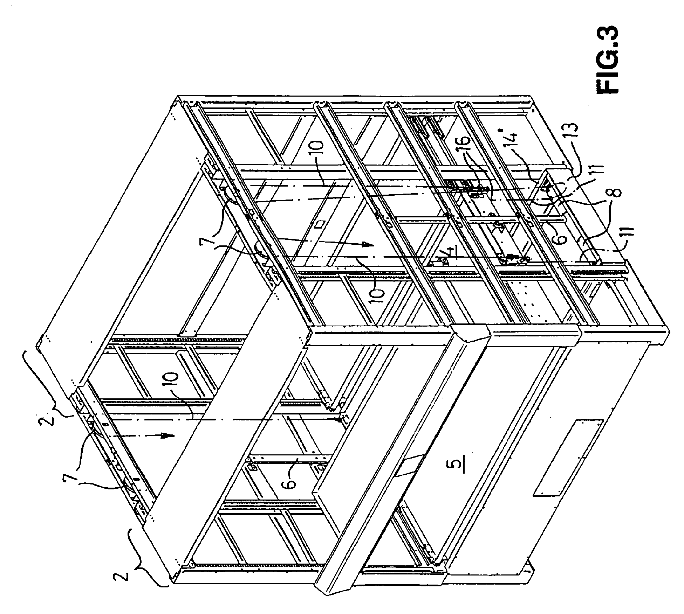

In Fig. 1 ist eine Perspektivdarstellung einer Lagervorrichtung 1 in Form eines mechanischen Schrankes gezeigt, der im wesentlichen aus zwei hintereinander angeordneten Regalrahmen 2 besteht (vgl. auch Fig. 2 und 3), in denen eine Vielzahl von flachen Lagergutträgern 3 auf seitlichen Auflagewinkeln 2a einlagerbar sind. Die Lagergutträger 3 werden hierbei durch eine Zubringer-Plattform 4 von einer Ein/Auslageröffnung 5 abgeholt und zu dem jeweiligen Fach in dem Regalrahmen 2 transportiert. Die Auslagerung erfolgt dabei in umgekehrter Weise, indem der jeweilige Lagergutträger 3 von entsprechenden Auflagewinkeln 2a an einem vorbestimmten Platz des Regalrahmens 2 gezogen wird, von der Plattform 4 dann auf die Ein-/Auslagerebene der Ein-/Auslageröffnung 5 bewegt wird und dann in diese ausgeschoben wird. Die Steuerung der Einlagerung bzw. Auslagerung erfolgt im allgemeinen dabei mittels der Antriebsvorrichtung prozessorgesteuert, wobei das Steuerteil beispielsweise hinter einem hier schematisch dargestellten Bedienfeld 12 angebracht ist, mit dem bestimmte Fachplätze in dem Regalrahmen 2 angewählt werden können. In der Ein-/Auslageröffnung 5 kann dabei auch ein Höhensensor vorgesehen sein, der die Höhe des einzulagernden Lagergutträgers 3 erfasst und diesem dann ein entsprechender Platz Regalrahmen 2 zugewiesen wird. Hierdurch ist eine hohe Variabilität und Lagerplatznutzung in der Lagervorrichtung 1 gegeben.

Zur Ein-/Auslagerung der jeweiligen Lagergutträger 3 sind an der Oberseite 4' der Zubringerplattform 4 hier Kettenantriebe 9 vorgesehen, mit denen die jeweiligen Lagergutträger 3 aus der Einlageröffnung 5 übernommen werden können bzw. auf diese ausgeschoben werden können. Um hierbei mit dem jeweiligen Lagergutträger 3 in Eingriff gehen zu können, ist beispielsweise ein vorderes bzw. rückseitiges Eingriffsprofil 21 (nur an einigen Lagergutträgem 3 durch je einen Haken angedeutet) für die Kettenantriebe 9 vorgesehen. In dieses Eingriffsprofil 21 am vorderen bzw. rückseitigen Ende der Lagergutträger 3 kann somit der Kettenantrieb 9 mit Mitnehmern (nicht dargestellt, da an sich bekannt) eingreifen.

In Fig. 2 ist eine Schnittdarstellung der Lagereinrichtung 1 gemäß Fig. 1 gezeigt, wobei insbesondere die Anordnung der beiden Regalrahmen 2 und die Plattform 4 ersichtlich sind, mit der nach dem Einschieben eines (hier beladenen) Lagergutträgers 3 von Hand, mittels Roboter oder eines sonstigen Regalbediengerätes, die Lagergutträger 3 an den zugewiesenen Lagerplatz im Regalrahmen 2 bewegbar sind. Dies erfolgt durch Höhenbewegung der Plattform 4 mittels eines geschlossenen Seilstranges, jeweils bestehend aus einem Tragseil 10 und einem Gegenzugseil 11. Das Tragseil 10 ist dabei über ein oberes Umlenkrad 7 geführt und mit einem Anlenkpunkt 16 an der Plattform 4 befestigt. Benachbart dazu ist ein zweiter Anlenkpunkt 16 vorgesehen, an dem das Gegenzugseil 11 befestigt ist, wobei beide Seile 10 und 11 straff gespannt sind und von einer gemeinsamen Seiltrommel 8 gegenläufig abwickelbar sind.

Wenn somit die Plattform 4 angehoben wird, wird das Tragseil 10 auf der Seiltrommel 8 aufgewickelt, während das Gegenzugseil 11 um die gleiche Länge abgewickelt wird. Die Plattform wird dabei in Höhenrichtung an einer Führungsschiene 6 (vgl. auch Fig. 3) geführt, beispielsweise mit einem hier schematisch angedeuteten Linearlager 6'. Falls jedoch an der Plattform 4 mehr als drei Tragseile 10 vorgesehen sind, insbesondere vier an jedem Eckbereich der Plattform, wie in der Ausführung nach Fig. 3, kann ein relativ einfaches Führungslager 6' ausreichen, da hierbei Kippbewegungen der Plattform 4 durch die Drei- oder Vierpunktaufhängung ohnehin ausgeschlossen sind.

Wie in Fig. 3 perspektivisch dargestellt, sind hierbei vier Tragseile 10 (erkennbar an den vier entsprechenden, oberen Umlenkrädern 7) und auch vier Gegenzugseile 11 vorgesehen, die jeweils von einer gemeinsamen Seiltrommel 8 auf- bzw. gegenläufig abwickelbar sind. Bevorzugt sind dabei zwischen Austritt- und Eintrittstelle des geschlossenen Seilstranges zwei oder drei Umwicklungen der Seiltrommel 8 vorgesehen, um die erforderliche Antriebsreibund auf das Seil sicherzustellen. Die hier sichtbaren, beiden Seiltrommeln 8 sind entlang einer Quertraverse 13 angeordnet, die die beiden modulartig aufgebauten Regalrahmen 2 verbindet. Dadurch ergibt sich eine besonders stabile Abstützung der Seiltrommeln 8 und optimale Krafteinleitung in den Rahmen, so dass auch bei hohen Kräften, beispielsweise bei schnellen Abbremsvorgängen der Plattform 4, kaum Seillängungen auftreten. Dadurch werden Positionierungsfehler oder Nachschwingungen in dem hier dynamisch sehr steif ausgelegten Antrieb in Verbindung mit dem jeweiligen Gegenzugseil 11 praktisch vermieden.

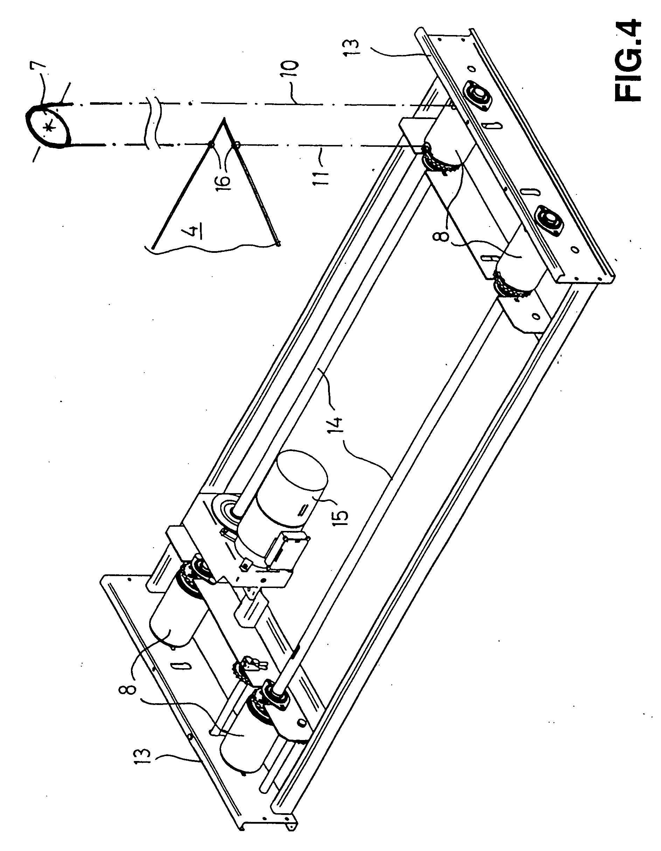

In Fig. 4 ist eine abgewandelte Ausführung der Lagerung der vier Seiltrommeln 8 dargestellt. Dabei ist auch der Seilverlauf eines geschlossenen Seilstranges angedeutet, wobei sich Tragseil 10 (nach Umlenkung am oberen Umlenkrad 7) und Gegenzugseil 11 an benachbarten Anlenkpunkten 16 an der Plattform 4 treffen, aber auch an der jeweiligen gemeinsamen Seiltrommel 8 zur gegenläufigen Auf- bzw. Abwicklung bei der Höhenbewegung der Plattform 4. Die (hier vier) Seiltrommeln 8 sind im Unterschied zur Fig. 3 nicht parallel zur Quertraverse 13 gelagert, sondern rechtwinklig dazu ausgerichtet. Hierdurch ergibt sich eine vereinfachte Bauweise des synchronen Seiltrommelantriebs über Wellen 14, die von einem gemeinsamen Motor 15 angetrieben werden. In Fig. 3 erfolgt der synchrone Antrieb der ebenfalls vier Seiltrommeln 8 (die hinteren beiden sind verdeckt) durch einen seitlich angeordneten Antriebskasten (mit Ketten oder Riemenantrieb, um den Gleichlauf der Seilstränge 10/11 sicherzustellen).

Insgesamt ergibt sich somit eine Antriebseinrichtung für Lagervorrichtungen mit hoher Positioniergenauigkeit, geräuscharmen Lauf, einfacher Bauweise und hohen Wartungsintervallen, also insgesamt ein besonders zuverlässiger Betrieb des mechanischen Schrankes.

## Patentansprüche

1. Antriebseinrichtung für eine Lagervorrichtung in Form eines mechanischen Schrankes mit einer Vielzahl von Lagergutträgern, die von der Antriebseinrichtung mit einer höhenbeweglichen Plattform selektiv zu einer Ein-/Auslageröffnung bewegbar sind, **dadurch gekennzeichnet, dass**
die Plattform (4) an wenigstens zwei geschlossenen Seilsträngen bestehend aus Tragseil (10) und Gegenzugseil (11) befestigt ist, die jeweils von einer gemeinsamen Seiltrommel (8) abwickelbar sind.

2. Antriebseinrichtung nach Anspruch 1, **dadurch gekennzeichnet, dass** die Lagervorrichtung (1) durch zwei Regalrahmen (2) gebildet ist, zwischen denen die Tragseile (10) um oben gelagerte Umlenkräder (7) beweglich ist.

3. Antriebseinrichtung nach Anspruch 1 oder 2, **dadurch gekennzeichnet, dass** die Seiltrommeln (8) an einer unteren Quertraverse (13) zwischen den Regalrahmen (2) angeordnet ist.

4. Antriebseinrichtung nach einem der Ansprüche 1 bis 3, **dadurch gekennzeichnet, dass** jeweils zwei Seiltrommeln (8) einander gegenüberliegend angeordnet ist.

5. Antriebseinrichtung nach Anspruch 3 oder 4, **dadurch gekennzeichnet, dass** die Achsen der Seiltrommeln (8) parallel zur Quertraverse (13) angeordnet sind.

6. Antriebseinrichtung nach Anspruch 3 oder 4, **dadurch gekennzeichnet, dass** die Achsen der Seiltrommeln (8) rechtwinklig zur Quertraverse (13) ausgerichtet sind.

7. Antriebseinrichtung nach Anspruch 5 oder 6, **dadurch gekennzeichnet, dass** je zwei Seiltrommeln (8) einen gemeinsamen Antriebsstrang (14) aufweisen.

8. Antriebseinrichtung nach einem der Ansprüche 1 bis 7, **dadurch gekennzeichnet, dass** vier Seiltrommeln (8) vorgesehen sind, deren Seile (10, 11) jeweils im Eckbereich der Plattform (4) angelenkt sind.

9. Antriebseinrichtung nach Anspruch 8, **dadurch gekennzeichnet, dass** die Anlenkpunkte (16) des Tragseils (10) und des Gegenzugseils (11) jeweils unmittelbar benachbart zueinander angeordnet sind.
